# EUROPÄISCHE PATENTSCHRIFT

(11) **EP 3 865 440 B1**
(45) Veröffentlichungstag und Bekanntmachung des Hinweises auf die Patenterteilung: **04.10.2023**
(21) Anmeldenummer: 20157449.8
(22) Anmeldetag: 14.02.2020
(51) Int. Cl.: B65H 45/101, B31D 1/00, B31F 1/00, B32B 29/00

(54) **VERFAHREN ZUR HERSTELLUNG EINES MEHRLAGIGEN ZELLSTOFFMATERIALS FÜR DIE HERSTELLUNG EINER VERPACKUNG**
METHOD OF MAKING A MULTILAYER CELLULOSE MATERIAL FOR THE MANUFACTURE OF A PACKAGE
PROCÉDÉ DE FABRICATION D'UNE MATIÈRE CELLULOSIQUE À PLUSIEURS COUCHES POUR LA FABRICATION D'UN EMBALLAGE

(43) Veröffentlichungstag der Anmeldung: 18.08.2021
(73) Patentinhaber: Bretthauer, Jens, 24220 Flintbek (DE)
(72) Erfinder: Bretthauer, Jens, 24220 Flintbek (DE)
(74) Vertreter: RGTH

(56) Entgegenhaltungen:
- DE-A1- 4 037 810
- DE-C- 515 605
- US-A- 4 279 610
- US-A- 4 766 649

## Beschreibung

### Technisches Gebiet

Die Erfindung betrifft ein Verfahren zur Herstellung eines mehrlagigen Zellstoffmaterials für die Herstellung einer Verpackung, wobei eine Zellstoffbahn kontinuierlich von zumindest einer Rolle abgerollt wird und die Zellstoffbahn mittels einer Faltvorrichtung gefaltet und abschnittsweise übereinander abgelegt wird zur Anordnung mehrerer Lagen übereinander.

Bereitgestellt wird ein mehrlagiges Zellstoffmaterial für die Herstellung einer Verpackung und eine Verpackung selbst sowie auch ein Verfahren zur Herstellung der Verpackung.

### Stand der Technik

Üblicherweise wird für die Herstellung einer Verpackung, wie zum Beispiel einer Papiertüte, einer Tasche oder eines Kartons, mehrlagiges Ausgangsmaterial mit vorgegebenen und gewünschten Abmessungen verwendet.

Für die Erzeugung mehrerer Lagen wird beispielsweise mittels einer Papiermaschine einlagiges Zellstoffmaterial mehrfach umgerollt, um eine Rolle mit dergewünschten Lagenzahl zu erzeugen. Beispielsweise können 16 Rollen mit einlagiger Zellstoffbahn auf eine einzige Rolle umgerollt werden, um auf dieser Rolle 16 Lagen einlagiger Zellstofflagen zu erzeugen. Die Rollen werden dann auf die gewünschte Breite der herzustellenden Verpackung, zum Beispiel der Tasche oder Tüte, geschnitten. Im Anschluss werden die Lagen von den Rollen abgerollt und übereinander abgelegt, um ein mehrlagiges Ausgangsmaterial mit den gewünschten Abmessungen zu erzeugen.

Die DE 40 37 810 A1 zeigt die Korrektur eines Winkelfehlers beim Abtäfeln von breiten Warenbahnen, das zickzackförmig auf ein unter 90 Grad zur Zuführrichtung angebrachtes Abzugsband erfolgt. Je schneller das Abzugsband läuft, also je weniger Lagen dort getäfelt werden, umso mehr vergrößert sich der theoretisch erforderliche Zuführungswinkel über 90 Grad hinaus. Da konventionelle Kreuzleger nur unter 90 Grad arbeiten können entsteht dadurch ein Winkelfehler. Die Erfindung kompensiert diesen Winkelfehler im Kreuzleger durch eine zusätzliche Fördereinrichtung, die dreieck- oder trapezförmig von den Ablieferwalzen des Kreuzlegers nach unten führt. Das Abzugsband des Kreuzlegers sollte unter dem gleichen Winkel nach unten geneigt sein. Dadurch können auch geringe Lagenzahlen selbst bei unelastischen Warenbahnen ohne Verzüge und faltenfrei gelegt werden.

Die US 4 279 610 A zeigt ein System zum Bilden einer geschichteten, kreuzweise gelappten Bahn aus Bahnmaterial mit einer vorbestimmten Breite, mit einer Fördereinrichtung, die eine Bahnstützfläche aufweist und in einer vorbestimmten Richtung bewegbar ist, einer Kreuzlegeeinrichtung, die relativ zu der Fördereinrichtung bewegbar ist und geeignet ist, das Bahnmaterial zu falten und es an die Bahnstützfläche zu liefern, um eine geschichtete, kreuzweise gelappte Bahn auf der Fördereinrichtung zu bilden, und einer Einrichtung, die benachbart zu der Bahnstützfläche der Fördereinrichtung angeordnet ist, und einer Bahnmaterialfalte, die geeignet ist, einen Sog gegen das Bahnmaterial zu erzeugen, um die Falte an einer vorbestimmten Stelle relativ zu der Bahnstützfläche der Fördereinrichtung zu positionieren.

Die DE 515 605 C zeigt ein Verfahren und eine Maschine zur Herstellung von Wellpappe mit schräg zu den Beschnittkanten laufenden Wellenlinien,

Die US 4 766 649 A zeigt ein Verfahren und eine Vorrichtung zur Vermeidung von periodischen Ungleichmäßigkeiten in Papierherstellungsfilzen durch Variation der Breite der in einen Kreuzleger einlaufenden Bahn.

### Darstellung der Erfindung: Aufgabe, Lösung, Vorteile

Um den Aufwand für die Herstellung eines mehrlagigen Zellstoffmaterials für die Herstellung einer Verpackung zu reduzieren und gleichzeitig möglichst flexibel in Bezug auf die Zielabmessungen der herzustellenden Verpackung auszugestalten, wird ein Verfahren zur Herstellung eines mehrlagigen Zellstoffmaterials für die Herstellung einer Verpackung gemäß Anspruch 1 vorgeschlagen.

Demnach wird eine Zellstoffbahn kontinuierlich von zumindest einer Rolle abgerollt. Währenddessen werden zumindest die folgenden Verfahrensschritte ausgeführt:
a) Ablegen eines Abschnitts der Zellstoffbahn auf einem Förderband zur Ausbildung einer Lage;
b) Falten der Zellstoffbahn mittels einer Faltvorrichtung und Ablegen eines weiteren Abschnitts der Zellstoffbahn auf der vorherigen Lage zur Ausbildung einer weiteren Lage;
c) kontinuierliches Wiederholen von Schritt b).

Erfindungsgemäß wird das Förderband während der Schritte a) und b) kontinuierlich oder in diskreten Zeitabständen im Wesentlichen quer oder schräg zu einer Abrollrichtung der Rolle bewegt, während die Zellstoffbahn weiterhin kontinuierlich von der zumindest einen Rolle abgerollt wird. Dabei werden die einzelnen Lagen in Schritt b) abschnittsweise übereinander und versetzt zueinander angeordnet.

Unter dem mehrlagigen Zellstoffmaterial wird ein mehrlagiges Ausgangsmaterial für die Herstellung einer Verpackung verstanden. Beispielsweise kann das mehrlagige Zellstoffmaterial Teil der vollständigen Verpackung oder die vollständige Verpackung selbst sein. Bevorzugterweise dient das erfindungsgemäße Verfahren aber zur Herstellung des mehrlagigen Ausgangsmaterials, zum Beispiel eines Zuschnitts für die anschließende oder spätere Weiterverarbeitung und Herstellung einer Verpackung.

Unter einer Zellstoffbahn ist eine einlagige oder mehrlagige Zellstoffbahn, aufweisend oder bestehend aus Papier, zum Beispiel Altpapier, zu verstehen. Die Zellstoffbahn ist auf einer Rolle und somit als Rollenware aufgerollt. Da die Zellstoffbahn Papier aufweist oder aus Papier (beispielsweise Altpapier) besteht, ist die spätere Verpackung in einer Papiertonne entsorgbar, kompostierbar beziehungsweise verrottet in freier Natur.

Erfindungsgemäß ist mindestens eine Rolle vorgesehen. Es können aber auch mehrere Rollen mit identischen oder unterschiedlichen Zellstoffbahnen vorgesehen sein. Ferner könnten so zusätzlich zu der mindestens einen Rolle mit einlagiger oder mehrlagiger Zellstoffbahn auch Rollen mit anderen Materialien vorgesehen sein.

Das Flächengewicht der, auf der Rolle aufgewickelten Zellstoffbahn beträgt bevorzugterweise zwischen 10 und 50 g/m². Besonders bevorzugterweise beträgt das Flächengewicht zwischen 15 und 30 g/m², zum Beispiel könnte das Flächengewicht 20 g/m² betragen.

Die Breite des mittels dieses Verfahrens hergestellten mehrlagigen Zellstoffmaterials kann unabhängig von den Rollenabmessungen und den Abmessungen der Zellstoffbahn (Rollenware) mittels der Faltvorrichtung vorgegeben werden. Im Wesentlichen entspricht die Breite des mehrlagigen Zellstoffmaterials der Länge der in einem Schritt abgelegten Lage. Diese ist vollständig variabel und kann gemäß der gewünschten Zielbreite angepasst und verändert werden.

Unter dem Falten in Schritt b) wird verstanden, dass nach dem Ablegen einer einzelnen Lage entsprechend der gewünschten Breite des herzustellenden mehrlagigen Zellstoffmaterials die Zellstoffbahn gefaltet, zurückgeführt und eine zweite Lage im Wesentlichen auf der ersten Lage abgelegt wird. Aufeinanderfolgende Lagen werden also in jeweils entgegengesetzter Richtung zueinander übereinander abgelegt. Erfindungsgemäß wird die zweite Lage dabei aber versetzt zur vorherigen Lage abgelegt.

Unter abschnittsweisem Übereinanderlegen der Lagen wird verstanden, dass ein wesentlicher Teil einer Lage auf die vorherige beziehungsweise direkt darunterliegende Lage abgelegt wird. Der überlappende Teil bildet die Versetzung und wird auf das darunterliegende Förderband beziehungsweise eine bereits auf dem Förderband angeordnete Unterlage oder auf einer oder mehreren früheren Lagen, die vor der vorherigen Lage abgelegt wurden, abgelegt. Hierfür wird das Förderband quer oder schräg zur Abrollrichtung bewegt. Somit können die Abrollrichtung und die Richtung der Bewegung des Förderbandes in einem Winkel größer als 0° und kleiner oder gleich 90° zueinander ausgerichtet sein. Bevorzugterweise ist dieser Winkel größer als 30° und ganz besonders bevorzugterweise größer als 45°.

Die Anzahl der Lagen vollständig variabel. Durch eine höhere Anzahl von Lagen kann eine besonders gute thermische Isolierung erzeugt werden. Eine typische Anzahl von Lagen für die Herstellung einer Tasche, zum Beispiel einer thermisch isolierenden Tasche, beträgt ca. 20 bis 40. Für Kartonagen, zum Beispiel Kartons oder Kisten, werden üblicherweise ca. 20 bis 60 Lagen übereinander angeordnet, um die gewünschte Stabilität zu erzeugen.

Durch das erfindungsgemäße Herstellungsverfahren ist es im Gegensatz zu aus dem Stand der Technik bekannten Verfahren möglich, in einem einzigen Arbeitsgang mehrlagige Zellstoffmaterialien beziehungsweise Bahnen beliebiger Breite und mit beliebiger Lagenzahl aus einer einzigen Rollenware herzustellen. Auch die Länge des herzustellenden mehrlagigen Zellstoffmaterials ist unabhängig von den Abmessungen der verwendeten Rollenware. Die Breite der Rolle beziehungsweise Zellstoffbahn kann variiert beziehungsweise verändert werden und gibt nicht zwangsläufig wie bei aus dem Stand derTechnik bekannten Verfahren die finalen Abmessungen des Verpackungszuschnitts vor.

Schritt b) beziehungsweise das Falten und Ablegen weiterer Lagen versetzt zur vorherigen Lage übereinander wird so lange kontinuierlich wiederholt, bis die gewünschte Anzahl der Lagen übereinander angeordnet ist und das mehrlagige Zellstoffmaterial die erforderliche beziehungsweise vorgegebene Länge aufweist. Bevorzugterweise wird das Verfahren kontinuierlich weitergeführt, um eine Endlosbahn beziehungsweise Rollenware aus mehrlagigem Zellstoffmaterial herzustellen.

Bevorzugterweise wird mittels einer Förderbandgeschwindigkeit und/oder einer Abrollgeschwindigkeit ein Überlappungsgrad für die einzelnen Lagen eingestellt und/oder vorgegeben. Unter der Förderbandgeschwindigkeit ist die Geschwindigkeit der Bewegung des Förderbandes quer oder schräg zur Abrollung zu verstehen. Unter der Abrollgeschwindigkeit ist die Geschwindigkeit des Drehens oder Rotierens der Rolle beziehungsweise die Geschwindigkeit des Abrollens der Zellstoffbahn von der Rolle zu verstehen. Der Überlappungsgrad gibt den Anteil der Überlappung der beiden direkt übereinander beziehungsweise nacheinander abgelegten Lagen vor. Bevorzugterweise beträgt der Überlappungsgrad mindestens 50 % und höchstens 99 % der Fläche einer Lage. Durch die Variierung von Förderbandgeschwindigkeit und/oder Abrollgeschwindigkeit kann ferner die Dicke des mehrlagigen Zellstoffmaterials beziehungsweise die Anzahl der Lagen des mehrlagigen Zellstoffmaterials eingestellt und vorgegeben werden.

Während und/oder nach dem Abrollen der Zellstoffbahn ist bevorzugterweise vorgesehen, dass diese vor dem Ablegen in Schritten a) und b) mittels mindestens einer Prägevorrichtung geprägt wird. Unter Prägen ist zu verstehen, dass in die Zellstoffbahn vor dem Ablegen der entsprechenden Lage eine dreidimensionale Struktur eingeprägt wird. Dabei kann die Zellstoffbahn einseitig oder doppelseitig geprägt werden.

Es können auch mehrere gleiche oder unterschiedliche Prägevorrichtungen für identische oder unterschiedliche Prägemuster vorgesehen sein. Zum Beispiel können mehrere Prägevorrichtungen mit unterschiedlichen Prägemustern in Serie oder parallel verwendet werden, um der Zellstoffbahn beim oder nach dem Abrollen von der Rolle unterschiedliche Prägemuster einzuprägen.

Des Weiteren könnten Zellstoffbahnen von mehreren Rollen abgerollt werden, wobei den einzelnen Rollen jeweils Prägeeinrichtungen mit unterschiedlichen Prägemustern zugeordnet sind und die einzelnen Zellbahnen während und/oder nach dem Abrollen mit unterschiedlichen Prägemustern geprägt werden.

Durch das Einbringen einer Prägung in die einzelnen übereinander angeordneten Lagen kann die Isolierung des mehrlagigen Zellstoffmaterials weiter erhöht beziehungsweise verbessert werden.

Des Weiteren ist bevorzugterweise vorgesehen, dass die Zellstoffbahn derart geprägt wird und die Lage in Schritt b) derart gefaltet und versetzt zur vorherigen Lage auf dieser abgelegt wird, dass die Prägungen der übereinander angeordneten Lagen versetzt zueinander angeordnet werden. Somit ist bevorzugterweise vorgesehen, dass die Prägungen der beiden direkt übereinander angeordneten Lagen nicht ineinander fallen. Dies erhöht die Anzahl und somit das Volumen der sich durch die Prägungen ergebenden Zwischenräume zwischen einzelnen Lagen des mehrlagigen Zellstoffmaterials und verbessert somit weiter die Isolationswirkung.

Besonders bevorzugterweise ist vorgesehen, dass die einzelnen Lagen abwechselnd mit positiver und negativer Prägung übereinander abgelegt werden. Zum Beispiel könnten zwei Rollen vorgesehen sein, wobei jeder Rolle eine Prägevorrichtung zum einseitigen Prägen der jeweiligen Zellstoffbahn zugeordnet ist. Nach dem Prägen werden die Lagen dann derart übereinander gelegt, dass eine geprägte Seite einer Lage, also die Seite einer Lage mit positiver Prägung, an eine ungeprägte Seite, also die Seite einer Lage mit negativer Prägung, einer anderen Lage anliegt.

Die Zellstoffbahn wird in Schritt b) vorzugsweise derart gefaltet, dass die Lage nicht parallel zur vorherigen Lage auf dieser abgelegt wird. Hierunter ist zu verstehen, dass die Kanten der beiden direkt übereinander beziehungsweise nacheinander abgelegten Lagen nach dem Ablegen nicht parallel zueinander verlaufen.

Die einzelnen Lagen werden besonders bevorzugterweise zickzack-förmig übereinander abgelegt. Hierdurch wird in relativ einfacher und zuverlässiger Weise vermieden, dass die negativen Ausformungen einer Prägung mit den positiven Ausformungen einer Prägung der vorherigen Lage aufeinander beziehungsweise ineinander fallen. Die Kanten der direkt übereinander beziehungsweise nacheinander abgelegten Lagen sind nach dem Ablegen in einem spitzen Winkel zueinander angeordnet. Jeweils jede zweite Lage ist dagegen im Wesentlichen wiederum parallel zueinander angeordnet.

Auch ist bevorzugterweise vorgesehen, dass vor Schritt a) und/oder nach dem Ablegen der letzten Lage ein bahnenförmiges Material als Unterlage und/oder Decklage auf dem Förderband und/oder auf den Lagen abgelegt wird. Damit kann in einfacher Weise das mehrlagige Zellstoffmaterial mit einer Decklage und/oder Unterlage versehen werden. Das bahnenförmige Material für die Decklage und/oder Unterlage kann jedes für die herzustellende Verpackung geeignete Material sein. Beispielsweise kann dieses Material ein PE-Vlies oder ein Kraftpapier sein.

Besonders bevorzugterweise wird die Unterlage mit der Decklage entlang deren Längskanten miteinander verbunden. Hierdurch wird eine Art Tasche beziehungsweise Hülle für das zwischen Decklage und Unterlage angeordnete mehrlagige Zellstoffmaterial geschaffen. Die Decklage kann mit der Unterlage durch Vernähen, Verkleben, Verschweißen, Verpressen oder anderweitig mechanisch miteinander verbunden werden. Die dazwischen angeordneten Lagen können, müssen aber nicht, mit der Unterlage und der Decklage entlang deren Längskanten verbunden, zum Beispiel vernäht, werden. Die stirnseitigen Enden beziehungsweise Kanten der Unterlage und/oder Decklage können optional miteinander verbunden werden oder offengelassen werden.

Zur Herstellung eines passenden Verpackungszuschnitt aus dem mehrlagigem Zellstoffmaterial ist bevorzugterweise vorgesehen, dass nach dem Ablegen der Lagen das mehrlagige Zellstoffmaterial in Längsrichtung und/oder Querrichtung entsprechend zugeschnitten wird. Dabei werden die Kanten vorzugsweise soweit abgeschnitten, dass der Verpackungszuschnitt auch in seinen Randbereichen die vollständige Lagenzahl aufweist. Optional kann dabei bereits das mehrlagige Zellstoffmaterial entsprechend der geforderten Abmessungen für die herzustellende Verpackung zugeschnitten werden.

Nach dem Ablegen der Lagen des mehrlagigen Zellstoffmaterials kann dieses bevorzugterweise zur Lagerung und/oder Weiterverarbeitung aufgerollt werden. Beispielsweise kann das mehrlagige Zellstoffmaterial auf eine Rolle aufgerollt und auf dieser Rolle so lange gelagert werden, bis daraus entsprechende Verpackungen herzustellen sind. Hierfür wird das vorbereitete mehrlagige Zellstoffmaterial von der Rolle abgerollt und in entsprechende Platinen für die Herstellung der Verpackung, zum Beispiel der Tasche oder eines Kartons, zugeschnitten.

Ein Verfahren zur Herstellung einer Verpackung, insbesondere einer Tasche oder einer Kiste aus einem vorbeschriebenem mehrlagigen Zellstoffmaterial ist vorgesehen. Hierfür wird das mehrlagige Zellstoffmaterial entsprechend zugeschnitten und/oder gefaltet und/oder es werden die einzelnen Zuschnitte miteinander verbunden.

Ein gemäß des vorbeschriebenen Verfahrens hergestelltes mehrlagiges Zellstoffmaterial ist vorgesehen. Das mehrlagige Zellstoffmaterial ist bevorzugterweise als Endlosvlies beziehungsweise Rollenware ausgebildet.

Die einzelnen Lagen des mehrlagigen Zellstoffmaterials bestehen aus Lagen von einlagigem oder mehrlagigem Zellstoffmaterial, wobei die Lagen versetzt zueinander und abschnittsweise übereinander angeordnet sind. Besonders bevorzugterweise sind die einzelnen Lagen zickzack-förmig übereinander beziehungsweise aufeinander angeordnet. Bevorzugterweise beträgt der Überlappungsgrad mindestens 50 % und höchstens 99 % der Fläche einer Lage.

Auch können die einzelnen Lagen Prägungen beziehungsweise dreidimensionale Strukturen aufweisen, welche versetzt zueinander in den übereinander angeordneten Lagen angeordnet sind. Somit fallen die Ausprägungen von zwei direkt übereinander angeordneten Lagen nicht direkt aufeinander beziehungsweise ineinander.

Eine Verpackung ist vorgesehen, welche aus einem vorbeschriebenen mehrlagigen Zellstoffmaterial hergestellt ist. Die Verpackung kann beispielsweise eine Tasche, zum Beispiel eine Kühltragetasche, oder ein Transportbehälter sein.

Durch die isolierende Wirkung des mehrlagigen Zellstoffmaterials sind die Anwendungsfälle für die Verpackung sehr vielseitig. Beispielsweise kann die Verpackung für den Transport von zu isolierenden Waren, zum Beispiel gekühlten oder erhitzten Waren, dienen. Des Weiteren könnten stoßempfindliche oder lichtempfindliche Waren in der Verpackung aufbewahrt oder mittels der Verpackung transportiert werden. Ferner könnte aufgrund der guten Lebensmittelverträglichkeit des mehrlagigen Zellstoffmaterials die Verpackung generell für den Transport von Lebensmitteln herangezogen werden. Da die Verpackung bevorzugterweise vollständig aus Papier beziehungsweise dem mehrlagigen Zellstoffmaterial besteht, kann die Verpackung nach dem Gebrauch in einfacher Weise und umweltverträglich entsorgt werden.

### Kurze Beschreibung der Zeichnungen

Die Erfindung wird im Folgenden anhand bevorzugter Ausführungsformen beispielhaft erläutert.

Es zeigen schematisch:
- Figur 1:: den Ablauf eines Verfahrens zur Herstellung eines mehrlagigen Zellstoffmaterials;
- Figur 2:: ein mehrlagiges Zellstoffmaterial; und
- Figur 3a und 3b:: Verpackungen aus einem mehrlagigen Zellstoffmaterial.

### Bevorzugte Ausführungsformen der Erfindung

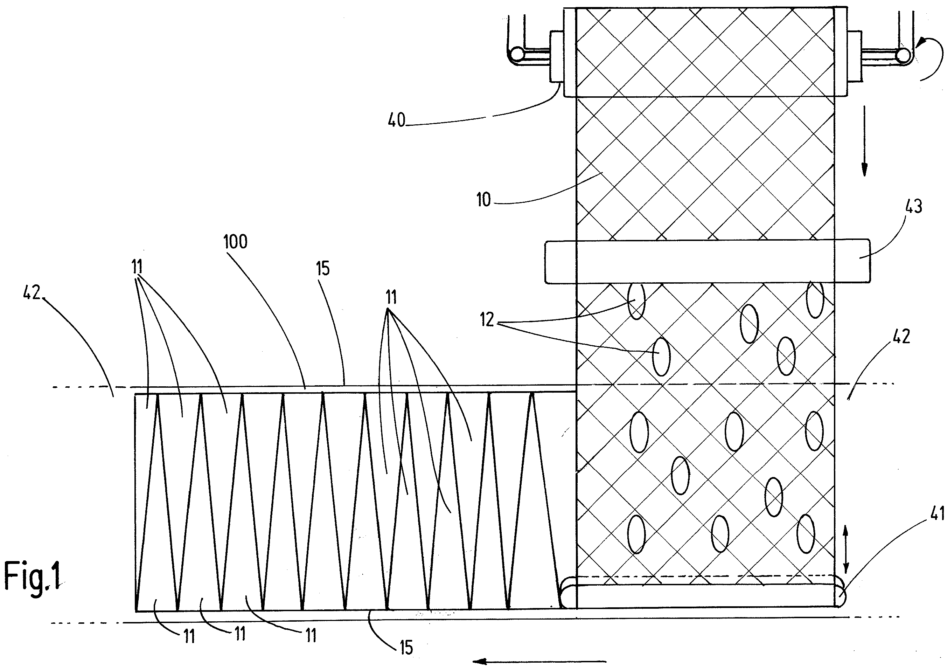

In Figur 1 ist schematisch das Verfahren zur Herstellung eines mehrlagigen Zellstoffmaterials 100 für die Herstellung einer Verpackung 200 (der besseren Übersicht halber in Figur 1 nicht dargestellt) gezeigt. Die Zellstoffbahn 10 ist einlagig oder mehrlagig auf einer Rolle 40 aufgerollt und wird während des Herstellungsverfahrens kontinuierlich von der Rolle 40 abgerollt.

Während des Abrollens der Zellstoffbahn 10 von der Rolle 40 wird ein Abschnitt der Zellstoffbahn 10 auf einem Förderband 42 zur Ausbildung einer Lage 11 abgelegt.

Danach wird die Zellstoffbahn 10 mittels einer Faltvorrichtung 41 gefaltet, zurückgeführt und ein weiterer Abschnitt der Zellstoffbahn 10 auf die vorherige Lage zur Ausbildung einer weiteren Lage 11 abgelegt. Dieser Schritt wird kontinuierlich so lange wiederholt, bis die gewünschte Lagenzahl und/oder Länge des mehrlagigen Zellstoffmaterials 100 erreicht ist.

Das Förderband 42 wird während der vorgenannten Schritte, das heißt während des übereinander Ablegens und Faltens der einzelnen Lagen 11 der Zellstoffbahn 10 quer zur Abrollrichtung der Rolle 40 bewegt, sodass die einzelnen Lagen 11 abschnittsweise übereinander, aber versetzt zueinander, angeordnet werden. Grundsätzlich könnte im Sinne der vorliegenden Erfindung das Förderband 42 auch schräg zur Abrollrichtung der Rolle 40 bewegt werden. Der in Figur 1 beispielhaft gezeigte Überlappungsgrad ist zur besseren Veranschaulichung sehr klein gewählt. Für das erfindungsgemäße Verfahren kann ein höherer Überlappungsgrad vorgesehen sein.

Wie in Figur 1 dargestellt, werden die einzelnen Lagen 11 der Zellstoffbahn 10 derart abschnittsweise und versetzt zueinander beziehungsweise übereinander abgelegt, dass diese zickzack-förmig zueinander beziehungsweise aufeinander angeordnet werden.

Zwischen dem Abrollen und dem Ablegen der Zellstoffbahn 10 werden der Zellstoffbahn 10 mehrere Prägungen 12 mittels einer Prägevorrichtung 43 eingeprägt. Durch das zueinander versetze Anordnen der einzelnen Lagen 11 übereinander liegen die Prägungen 12 von zwei direkt übereinander angeordneten Lagen 11 nicht direkt aufeinander auf beziehungsweise ineinander. Dies erhöht die Isolationswirkung des mehrlagigen Zellstoffmaterials 100.

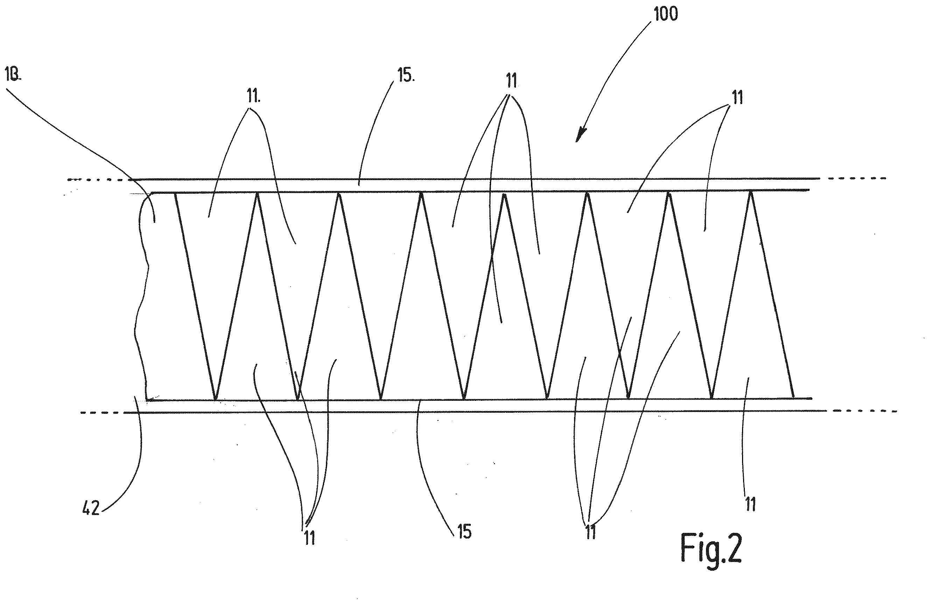

In Figur 2 ist abschnittsweise ein mehrlagiges Zellstoffmaterial 100 gezeigt, welches gemäß eines vorbeschriebenen Verfahrens hergestellt wurde. Der besseren Übersicht halber ist lediglich ein Abschnitt des als Rollenware beziehungsweise Endlosvlies hergestellten mehrlagigen Zellstoffmaterials 100 dargestellt. Die einzelnen Lagen 11 sind wieder zickzack-förmig übereinander abgelegt. Vor Beginn des Ablegens der einzelnen Lagen 11 der Zellstoffbahn 10 wurde auf dem Förderband 42 ein bahnenförmiges Material als Unterlage 13 angeordnet. Nach dem Anordnen der einzelnen Lagen 11 wird als Decklage 14 (der besseren Übersicht halber in Figur 2 nicht dargestellt) ebenfalls ein bahnenförmiges Material auf die Lagen aufgelegt. Entlang der Längskanten 15 von Unterlage 13 und Decklage 14 werden diese miteinander fest verbunden, beispielsweise vernäht. Somit wird aus Unterlage 13 und Decklage 14 eine Art Tasche für das mehrlagige Zellstoffmaterial 100 ausgebildet. Die einzelnen Lagen 11 der Zellstoffbahn 10 sind somit in der Tasche angeordnet.

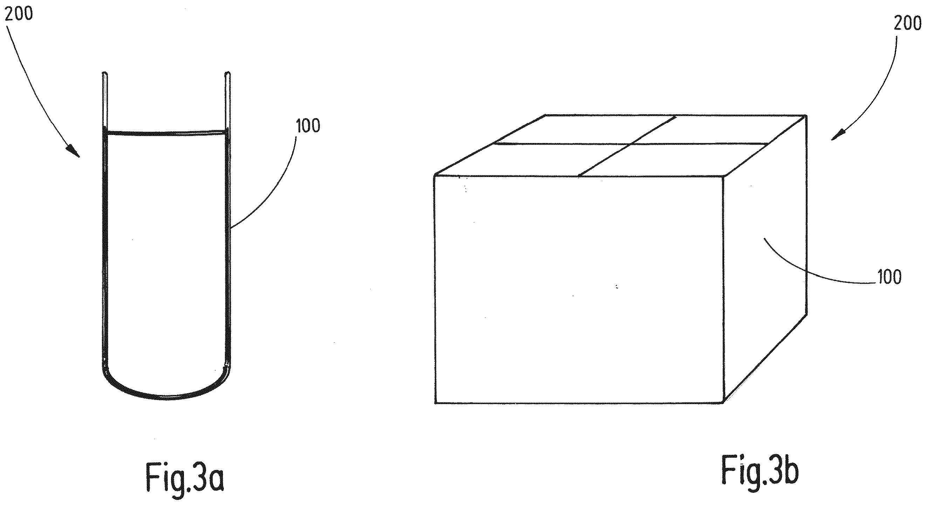

Figuren 3a und 3b zeigen Beispiele für Verpackungen 200, welche aus dem mehrlagigen Zellstoffmaterial 100 hergestellt sein können. Figur 3a zeigt beispielsweise eine Tragetasche aus dem mehrlagigen Zellstoffmaterial 100. Figur 3b zeigt beispielsweise einen Karton aus dem mehrlagigen Zellstoffmaterial 100.

### Bezugszeichenliste

- 100: Mehrlagiges Zellstoffmaterial
- 200: Verpackung

- 10: Zellstoffbahn
- 11: Lagen
- 12: Prägung
- 13: Unterlage
- 14: Decklage
- 15: Längskanten

- 40: Rolle
- 41: Faltvorrichtung
- 42: Förderband
- 43: Prägevorrichtung

## Patentansprüche

1. Verfahren zur Herstellung eines mehrlagigen Zellstoffmaterials (100) für die Herstellung einer Verpackung (200), wobei eine einlagige oder mehrlagige Zellstoffbahn (10) kontinuierlich von zumindest einer Rolle (40) abgerollt wird, wobei das Verfahren zumindest die folgenden Schritte aufweist:
a) Ablegen eines Abschnitts der Zellstoffbahn (10) auf einem Förderband (42) zur Ausbildung einer Lage (11);
b) Falten der Zellstoffbahn (10) mittels einer Faltvorrichtung (41) und Ablegen eines weiteren Abschnitts der Zellstoffbahn (10) auf der vorherigen Lage zur Ausbildung einer weiteren Lage (11);
c) Kontinuierliches Wiederholen von Schritt b);
**dadurch gekennzeichnet,**
**dass** das Förderband (42) während der Schritte a) und b) kontinuierlich oder in diskreten Zeitabständen im Wesentlichen quer oder schräg zu einer Abrollrichtung der Rolle (40) bewegt wird, derart, dass die einzelnen Lagen (11) in Schritt b) abschnittsweise übereinander und versetzt zueinander angeordnet werden.

2. Verfahren gemäß Anspruch 1,
**dadurch gekennzeichnet,**
**dass** mittels einer Förderbandgeschwindigkeit und/oder einer Abrollgeschwindigkeit ein Überlappungsgrad für die einzelnen Lagen (11) eingestellt und/oder vorgegeben wird.

3. Verfahren gemäß Anspruch 1 oder 2,
**dadurch gekennzeichnet,**
**dass** während und/oder nach dem Abrollen der Zellstoffbahn (10) diese vor dem Ablegen in Schritten a) und b) mittels mindestens einer Prägevorrichtung (43) einseitig oder doppelseitig geprägt wird.

4. Verfahren gemäß Anspruch 3,
**dadurch gekennzeichnet,**
**dass** die Zellstoffbahn (10) derart geprägt wird und die Lage (11) in Schritt b) derart gefaltet und versetzt zur vorherigen Lage abgelegt wird, dass die Prägungen (12) der übereinander angeordneten Lagen (11) versetzt zueinander angeordnet werden.

5. Verfahren gemäß Anspruch 3 oder 4,
**dadurch gekennzeichnet,**
**dass** während und/oder nach dem Abrollen der Zellstoffbahn (10) diese mittels mehrerer Prägeeinrichtungen (43) mit unterschiedlichen Prägemustern geprägt wird; und/oder dass von mehreren Rollen (40) Zellstoffbahnen (10) abgerollt werden, wobei den Rollen (40) Prägeeinrichtungen (43) mit unterschiedlichen Prägemustern zugeordnet sind und die einzelnen Zellbahnen (10) während und/oder nach dem Abrollen mit unterschiedlichen Prägemustern geprägt werden.

6. Verfahren gemäß einem der vorhergehenden Ansprüche,
**dadurch gekennzeichnet,**
**dass** die Zellstoffbahn (10) in Schritt b) derart gefaltet wird, dass Lage (11) nicht parallel zur vorherigen Lage auf dieser abgelegt wird.

7. Verfahren gemäß einem der vorhergehenden Ansprüche,
**dadurch gekennzeichnet,**
**dass** die einzelnen Lagen (11) zickzack-förmig übereinander abgelegt werden.

8. Verfahren gemäß einem der vorhergehenden Ansprüche, **dadurch gekennzeichnet,**
**dass** die einzelnen Lagen (11) entlang ihrer Längs- und/oder Querkanten nach dem Falten miteinander verbunden werden.

9. Verfahren gemäß einem der vorhergehenden Ansprüche,
**dadurch gekennzeichnet,**
**dass** nach dem Ablegen der letzten Lage (11) ein bahnenförmiges Material als Decklage (14) auf den Lagen (11) abgelegt wird.

10. Verfahren gemäß einem der vorhergehenden Ansprüche,
**dadurch gekennzeichnet,**
**dass** nach dem Ablegen der Lagen (11) das mehrlagige Zellstoffmaterial (200) in Längsrichtung und/oder Querrichtung zugeschnitten wird.

11. Verfahren gemäß einem der vorhergehenden Ansprüche,
**dadurch gekennzeichnet,**
**dass** nach dem Ablegen der Lagen (11) das mehrlagige Zellstoffmaterial (200) zur Lagerung und/oder Weiterverarbeitung aufgerollt wird.

## Claims

1. Method of producing a multilayer pulp material (100) for producing a packaging (200), wherein a single-layer or multilayer pulp web (10) is continuously unwound from at least one roll (40), wherein the method comprises at least the following steps:
a) Placing a section of the pulp web (10) on a conveyor belt (42) to form a layer (11);
b) Folding the pulp web (10) by means of a folding device (41) and placing a further section of the pulp web (10) on the previous layer to form a further layer (11);
c) Continuously repeating step b);
**characterized in that**
the conveyor belt (42) is moved during steps a) and b) continuously or at discrete time intervals substantially transversely or obliquely to an unwinding direction of the roll (40), such that the individual layers (11) in step b) are arranged in sections one above the other and offset from one another.

2. Method according to claim 1,
**characterized in that**
a degree of overlap for the individual layers (11) is set and/or predetermined by means of a conveyor belt speed and/or an unwinding speed.

3. Method according to claim 1 or 2,
**characterized in that**
during and/or after unwinding of the pulp web (10), the latter is embossed on one side or on both sides by means of at least one embossing device (43) before being placed in steps a) and b).

4. Method according to claim 3,
**characterized in that**
the pulp web (10) is embossed in such a way and the layer (11) in step b) is folded and placed offset to the previous layer in such a way that the embossings (12) of the layers (11) arranged one above the other are arranged offset from each other.

5. Method according to claim 3 or 4,
**characterized in that**
during and/or after unwinding of the pulp web (10), the latter is embossed by means of several embossing devices (43) with different embossing patterns; and/or that pulp webs (10) are unwound from several rolls (40), wherein embossing devices (43) with different embossing patterns are assigned to the rolls (40) and the individual pulp webs (10) are embossed with different embossing patterns during and/or after unwinding.

6. Method according to one of the preceding claims,
**characterized in that**
the pulp web (10) is folded in step b) in such a way that layer (11) is not placed parallel to the previous layer.

7. Method according to one of the preceding claims,
**characterized in that**
the individual layers (11) are placed one on top of the other in a zigzag shape.

8. Method according to one of the preceding claims, **characterized in that** the individual layers (11) are joined with each other along their longitudinal and/or transverse edges after folding.

9. Method according to one of the preceding claims,
**characterized in that**
after the last layer (11) has been placed, a web-like material is placed as a top layer (14) on the layers (11).

10. Method according to one of the preceding claims,
**characterized in that**
after the layers (11) have been placed, the multilayer pulp material (200) is cut to size in the longitudinal direction and/or transverse direction.

11. Method according to one of the preceding claims,
**characterized in that**
after the layers (11) have been placed, the multilayer pulp material (200) is rolled up for storage and/or further processing.

## Revendications

1. Procédé de fabrication d'un matériau à base de cellophane multicouche (100) pour la fabrication d'un emballage (200), sachant qu'une bande de cellophane (10) monocouche ou multicouche est déroulée en continu d'au moins un rouleau (40), sachant que le procédé comporte au moins les étapes suivantes :
a) dépose d'une section de la bande de cellophane (10) sur une bande transporteuse (42) pour constituer une couche (11),
b) pliage de la bande de cellophane (10) au moyen d'un dispositif de pliage (41) et dépose d'une autre section de la bande de cellophane (10) sur la couche précédente pour constituer une autre couche (11),
c) répétition continue de l'étape b),
**caractérisé en ce que,**
la bande transporteuse (42) est déplacée pour l'essentiel en continu ou à des intervalles de temps discrets pendant les étapes a) et b) transversalement ou en diagonale par rapport à une direction de déroulage du rouleau (40) de telle manière que les couches individuelles (11) sont disposées dans l'étape b) par endroits l'une sur l'autre et décalées les unes par rapport aux autres.

2. Procédé selon la revendication 1,
**caractérisé en ce qu',**
un degré de chevauchement pour les couches individuelles (11) est réglé et/ou prédéfini au moyen d'une vitesse de bande transporteuse et/ou d'une vitesse de déroulage.

3. Procédé selon la revendication 1 ou 2,
**caractérisé en ce que**
pendant et/ou après le déroulage de la bande de cellophane (10), celle-ci est gaufrée d'un côté ou des deux côtés avant la dépose dans les étapes a) et b) au moyen d'au moins un dispositif de gaufrage (43).

4. Procédé selon la revendication 3,
**caractérisé en ce que**
la bande de cellophane (10) est gaufrée et la couche (11) est déposée pliée et décalée dans l'étape b) par rapport à la couche précédente de telle manière que les gaufrages (12) des couches (11) disposées les unes sur les autres sont disposés décalés les uns par rapport aux autres.

5. Procédé selon la revendication 3 ou 4,
**caractérisé en ce que**
pendant et/ou après le déroulage de la bande de cellophane (10), celle-ci est gaufrée avec des motifs de gaufrage différents au moyen de plusieurs dispositifs de gaufrage (43), et/ou, **en ce que** des bandes de cellophane (10) sont déroulées de plusieurs rouleaux (40), sachant que des dispositifs de gaufrage (43) avec des motifs de gaufrage différents sont attribuées aux rouleaux (40) et les bandes de cellophane individuelles (10) sont gaufrées pendant et/ou après le déroulage avec des motifs de gaufrage différents.

6. Procédé selon l'une quelconque des revendications précédentes,
**caractérisé en ce que**
la bande de cellophane (10) est pliée dans l'étape b) de telle manière que la couche (11) est déposée sur celle-ci de façon non parallèle à la couche précédente.

7. Procédé selon l'une quelconque des revendications précédentes,
**caractérisé en ce que,**
les couches individuelles (11) sont déposées en forme de zigzag l'une sur l'autre.

8. Procédé selon l'une quelconque des revendications précédentes,
**caractérisé en ce que**
les couches individuelles (11) sont reliées entre elles après le pliage le long de leurs bords longitudinaux et/ou transversaux.

9. Procédé selon l'une quelconque des revendications précédentes,
**caractérisé en ce qu'**
après la dépose de la dernière couche (11), un matériau en forme de bande est déposé sur les couches (11) en tant que couche de couverture (14).

10. Procédé selon l'une quelconque des revendications précédentes,
**caractérisé en ce qu'**
après la dépose des couches (11), le matériau à base de cellophane multicouche (200) est découpé en direction longitudinale et/ou en direction transversale.

11. Procédé selon l'une quelconque des revendications précédentes,
**caractérisé en ce qu'**
après la dépose des couches (11), le matériau à base de cellophane multicouche (200) est enroulé pour entreposage et/ou traitement ultérieur.
